Europäisches Patentamt

**European Patent Office**

Office européen des brevets

(19)

(11) Publication number: **0 004 782**

A2

(12)

## EUROPEAN PATENT APPLICATION

(21) Application number: **79300562.0**

(22) Date of filing: **05.04.79**

(51) Int. Cl.²: **B 29 C 27/00**
**A 41 D 27/00**

(30) Priority: **06.04.78 GB 1354378**

(43) Date of publication of application:
**17.10.79 Bulletin 79/21**

(84) Designated Contracting States:
**CH DE FR IT**

(71) Applicant: **Stevenson, Ernest**
**Sherston Mill Sherston**
**Malmesbury Wiltshire(GB)**

(72) Inventor: **Stevenson, Ernest**
**Sherston Mill Sherston,**
**Malmesbury Wiltshire(GB)**

(72) Inventor: **Westmacott, John Ernest**
**57 Walk Mill Lane, Kingswood**
**Wotton-under-Edge Gloucestershire(GB)**

(74) Representative: **Armitage, Ian Michael et al,**
**MEWBURN ELLIS & CO. 70/72 Chancery Lane**
**London WC2A 1AD(GB)**

(54) **Method and apparatus for joining webs of material.**

(57) Methods and apparatus for joining webs of elasticated material, e.g. to form a ring for a garment waistband. The web (34 is formed into a U-shaped loop, and its ends (42) are welded together in a transverse weld substantially entirely across the web by an ultrasonic welding horn (I). The elastic threads are firmly gripped in the weld, and are prevented from running longitudinally in time.

Such transverse welds can also be used in attaching buckles to elasticated webs.

FIG. 6

EP 0 004 782 A2

1.

## METHOD AND APPARATUS FOR JOINING WEBS
## OF MATERIAL

This invention relates to the textile and clothing industries, and especially to joining webs of material. More particularly, it relates to joining webs of elasticated materials, and also to forming a ring from an elongate web.

It is known to join a web of elasticated material to itself by sewing, for example to join two ends of a web to make a waistband of a garment. One disadvantage of this is that the threads of elastomer are not firmly gripped by the sewing, and in time they tend to run longitudinally in the web. It is also known to form a seam between two pieces of non-elasticated material by tacking the two pieces together at intervals with a short ultrasonic weld.

In one aspect the present invention provides a method of joining a web of material to itself or to another piece of material, the web containing threads of an elastomeric material extending at least partially in a longitudinal direction in the web, the method comprising the steps of laying one portion of the web over another portion thereof or over a portion of the other piece of material, and being characterised in that the two portions are welded together by means of a transverse weld substantially entirely across the web. This has the advantage that the elastomeric threads are secured in the weld and cannot run longitudinally in the web when the web is stretched longitudinally. The two portions of the web can be end portions thereof, to form a ring which can be used, for example, as a waistband in a garment. Alternatively, only one of the portions may be an end portion, being passed through a buckle or fastener and back over itself and welded. The material of the web may be woven or braided, with longitudinal elastomer threads, but it could also be knitted or crocheted, in which the elastomeric threads are looped in a longitudinal direction in the web. The welding is preferably performed by applying high frequency (ultrasonic) sound to the portions to be welded, but other welding techniques such as the application of heat or of high frequency radio waves could be used.

In a second aspect the invention provides a method of joining two opposed ends of an elongate web of a material to form a ring, characterised in that it comprises feeding the web longitudinally, clamping a leading end portion thereof, displacing the web out of the plane thereof between its two end portions to form a U and to bring a trailing end portion of the web into an adjacent position to the leading end portion, laying one end portion over the other, and securing the end portions together. Preferably the end portions are secured by welding, e.g. ultrasonic welding.

The invention also provides apparatus comprising means for performing each of the steps of the second method aspect of the invention. It also includes the products of either of the above method aspects.

The invention will now be exemplified with reference to the accompanying drawings, wherein:

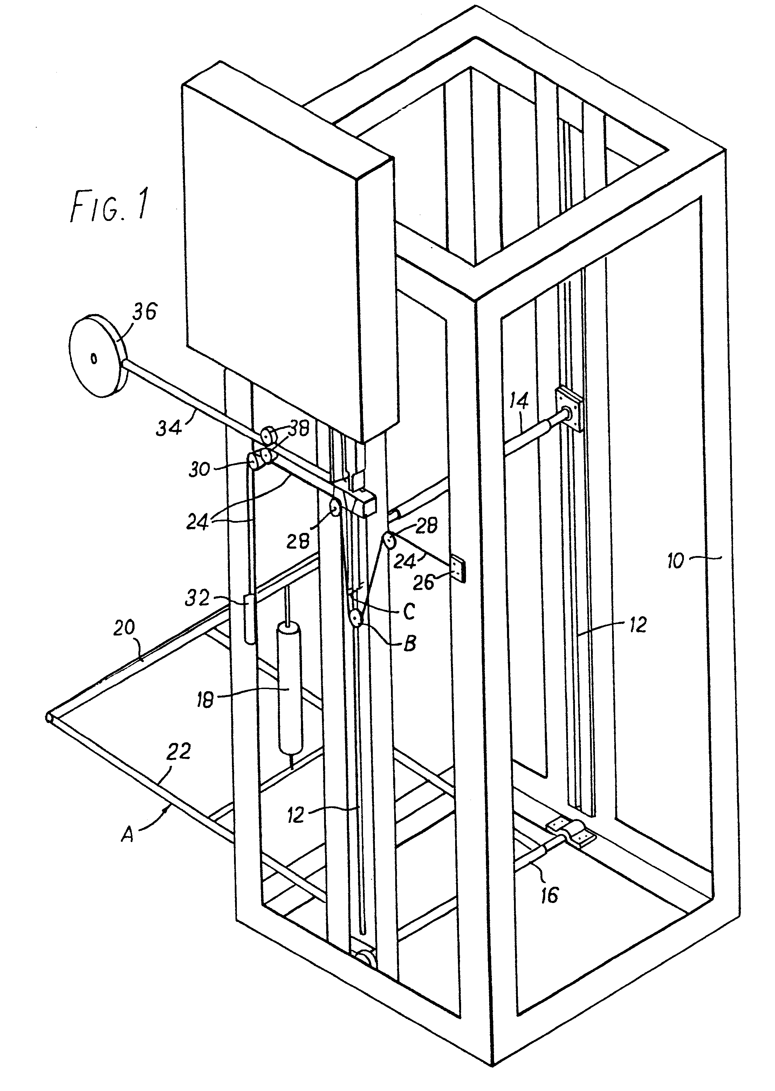

Fig. 1 is a perspective view of apparatus for forming rings of elastic material,

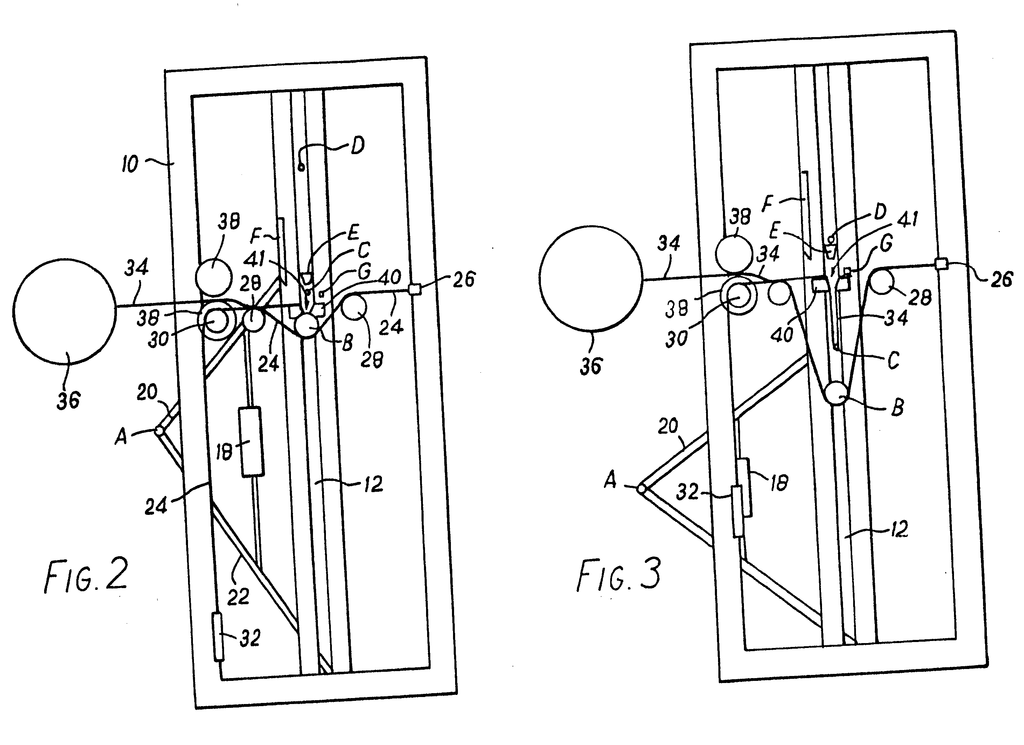

Figs. 2, 3 and 4 are side views of the apparatus, during different stages of the operation,

Figs. 5, 6, 7 and 8 are more detailed side views of part of the apparatus, and

Fig. 9 shows a buckle or fastener attached to a web of elastic material.

Referring to the drawings, the apparatus comprises a framework 10 having two opposed vertical slots 12 in which slides an upper axle 14 of an articulated lever arrangement A. The lever A has a lower axle 16 which is fixed to the base of the frame 10, and a pneumatic piston and cylinder 18 acts between upper and lower limbs 20,22 of the articulated lever. The piston and cylinder 18 causes the axle 14 to reciprocate in the slots 12.

The axle 14 carries a plate (not shown) on which are mounted two vertically spaced pins C,D, which slide in one of the slots 12. Pin D is above pin C, and its position on the plate can be adjusted so as to vary the vertical spacing between the pins. A cog wheel B is also journalled to the plate, a fixed distance below the pin C. The cog wheel B co-operates with a chain 24, one end of which is fixed at 26. The chain 24 passes under the cog wheel B, and over two fixed cog wheels 28, one on either side of the cog wheel B. From there, the chain 24 passes over a cog wheel 30 and terminates in a freely hanging balance weight 32.

To start the apparatus, a leading edge of a web of elastic material 34 is fed manually from a roll 36 thereof between feed rollers 38. The leading edge of the elastic web is taken past a guillotine F, which is operated manually and the end portion of the web discarded so as to define a known position for the leading edge of the web. After this setting up, the apparatus operates automatically as follows. The piston and cylinder 18 operate to move the articulated lever arrangement A downwardly, the pins C,D and the cog wheel B being brought down at the same time. As the cog wheel B moves downwardly, the chain 24 lifts the balance weight 32 and turns the cog wheel 30, which in turn is arranged to drive the feed rollers 38. The web 34 is fed over a fixed anvil 40, which is in two parts with a tapered opening 41 between them. When the leading edge of the web 34 reaches the far side of the anvil 40, it is clamped thereto by a clamp G.

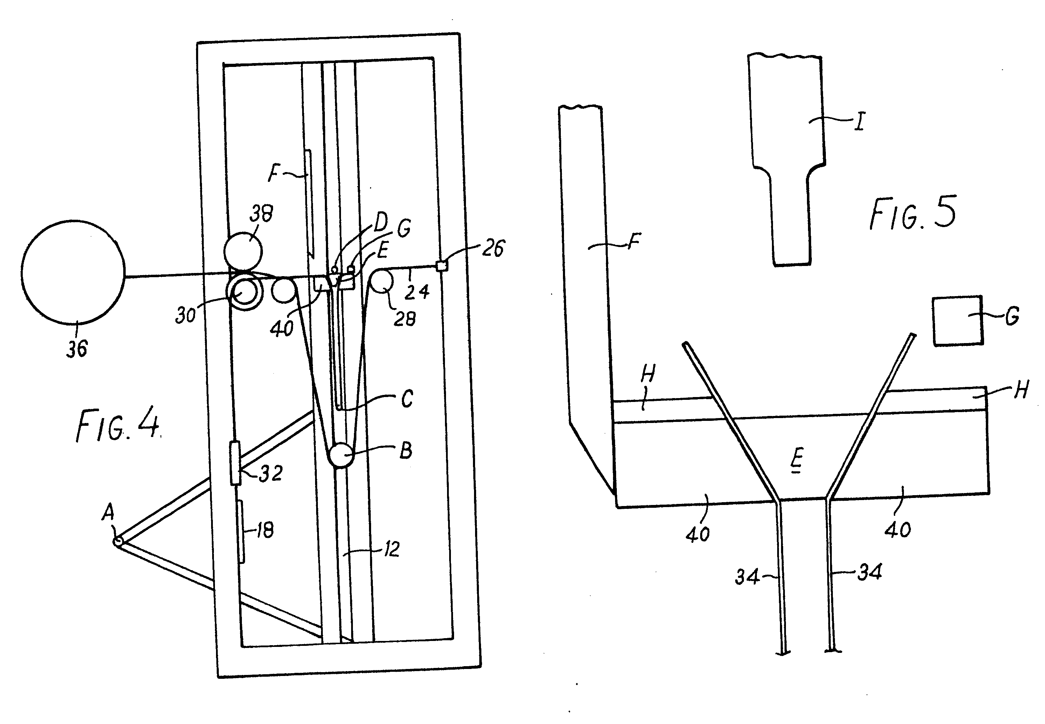

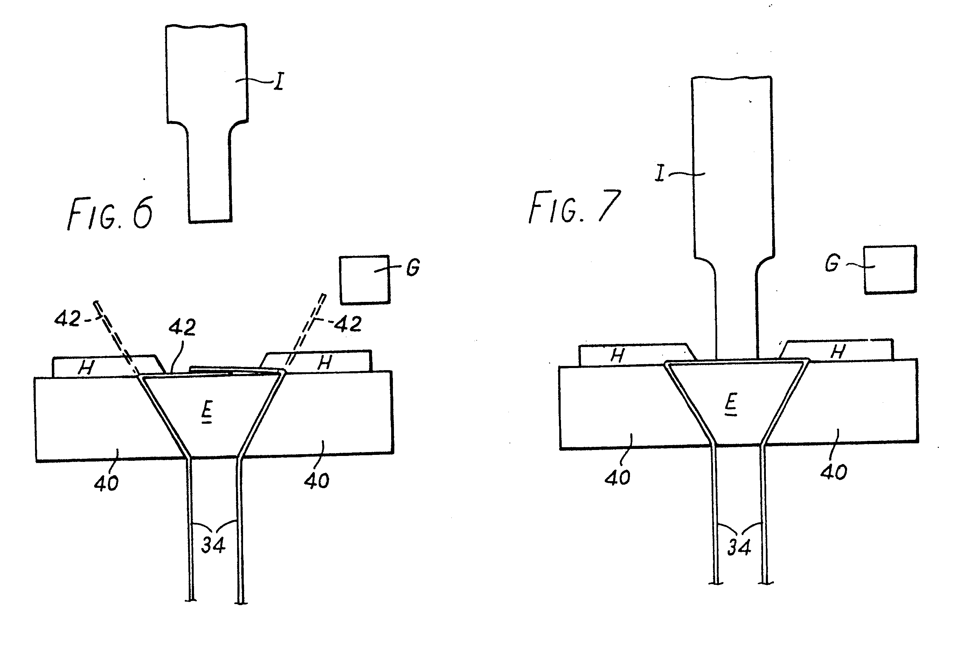

As the articulated frame A continues to move downwardly, pin C engages with the web over the opening in the anvil 40, and as seen in Fig. 3 the pin C pulls the web 34 downwardly into a U-shaped loop through this opening. The relative sizes of the cog wheel 30 and feed roller 38 are such that the web 34 is fed at twice the speed with which the pin C is moving downwardly. Towards the end of the downward stroke, pin D engages a movable wedge-shaped anvil E which is slidable in the slot 12. The anvil E co-operates with the tapered opening 41 in the fixed anvil 40, and the pin D brings it down into this opening, as seen in Figs. 4 to 7. At the same time, guillotine F is brought down to sever the web (Fig.5). There is thus provided a U-shaped loop of the elastic material, wedged at its upper ends between the moving anvil E and the fixed anvil 40. Clamp G is now released, and as seen in Fig. 6 a pair of fingerplates H overlying the anvil 40 are brought inwardly to lay the free ends 42 of the web 34 one over the other over the anvil E. To achieve this, one fingerplate H is moved a little after the other. As seen in Fig. 7, an ultrasonic horn I is now brought down over the overlapping ends of the web 34, and switched on. The ultrasonic acoustic energy emitted causes a transverse weld to be formed substantially entirely across the overlapping portions of the web 34, securing the overlapping ends together. In place of an ultrasonic welding apparatus, radio frequency or direct heat welding could be employed.

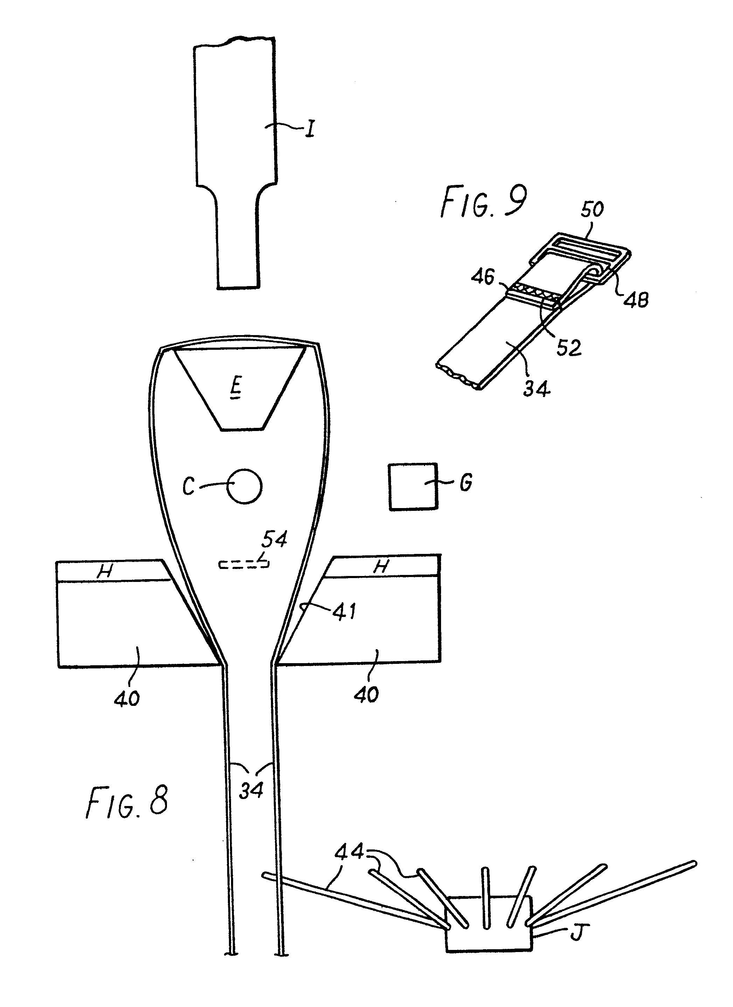

Finally, as seen in Fig. 8, the articulated lever A performs its upstroke, the horn I is lifted away, the wedge-shaped anvil E is lifted out of the opening 41 in the middle of the fixed anvil 40, bringing with it the ring formed from the web 34 of elastic material. Fig. 8 also shows a device for removing the ring of elastic material from the apparatus. A wheel J is mounted for rotation about a vertical axis. The wheel J has a plurality (e.g. ten) of outwardly extending spokes 44 arranged around its perimeter. The spokes 44 also project upwardly to some extent. The wheel J is rotated after the anvil E has been lifted to release the ring of elastic material, and the end of one of the spokes 44 catches the ring, pulling it off the anvil E. The ring will fall onto the spoke 44, and can subsequently be removed with other such rings. The rotation of the wheel J is controlled, for example, by a microswitch so that one ring of the elastic material is collected on successive spokes 44 on each cycle of the apparatus.

By vertical adjustment of the pin D, which controls the downward extent of the movement of the pin C and cog wheel B, the size of ring formed can be adjusted. The amount of overlap of the ends 42 of the web 34 can be controlled by adjusting the position of the guillotine F in relation to the anvil 40.

It will be understood that the apparatus has side guide plates in the region of the anvil 40, to locate the web laterally. It will also be understood that the pin D is shorter than the pin C, so that while it engages the anvil E, it will not foul the ends 42 of the web when they are brought over each other.

In a modification of the apparatus, a strip (indicated by dotted lines at 54 in Fig. 8) could be provided, affixed to the plate (not shown) which moves with the axle 14 and extending through the slot 14 into the opening 41 in the anvil 40. Although the strip has to be narrow enough to pass through the bottom of the opening 41, when the pin C (also affixed to the same plate) moves downwardly, it nevertheless acts as a bridge across the opening 41 when the end of the web 34 is fed to the clamp G, helping to prevent the web falling into the opening 41. The pin C and strip 54 could be replaced by the free arms of a U-shaped bracket made from sheet metal and passing through the slot 12, the base of the U being secured to the plate on the axle 14.

In a further modification, the apparatus has a plurality of web-processing channels arranged in parallel, each channel having its own anvils 40 and E, pins C and D, and so forth. The channels are driven by a common articulated lever A. Each channel is fed with a web 34, either from separate reels 36, or from a "multiple end" package on which is wound a plurality of webs.

The apparatus described could be used for forming rings in other materials than elastic material, and in such cases the free ends 42 could be secured by other means than welding. However, welding is particularly advantageous where the web 34 has elastomer threads which extend at least partially in the longitudinal direction and which are woven, knitted, braided or crocheted with threads of a textile material, since the elastomer threads will be firmly secured in the transverse weld and will not pull out with repeated stretching of the ring such as occurs in the waistbands of underclothing. For example, the web 34 could be a woven material in which some or all warp threads are of elastomer spirally overwound with textile threads, while the weft threads are all of textile material. The edges of the web can be selvedged.

In the first method aspect of the invention, it is not necessary that end portions of the web be welded together to form a ring. Fig. 9 shows an elasticated web 34 of the type described above. The end 46 thereof is passed through an aperture 48 in a buckle or fastener 50, and is welded (preferably by ultrasonic welding) to the web in a transverse weld region 52. The fastener 50 is thus retained, and since the longitudinal elastomer threads are secured in the weld they cannot run when the web is stretched. Obviously a similar method could be used to secure an elasticated web 34 to a dissimilar material.

CLAIMS:

1.      A method of joining a web of material to itself or to another piece of material, the web containing threads of an elastomeric material extending at least partially in a longitudinal direction in the web, the method comprising the steps of laying one portion of the web over another portion thereof or over a portion of the other piece of material, and being characterised in that the two portions (42;46) are welded together by means of a transverse weld (52) substantially entirely across the web (34).

2.      A method according to claim 1 characterised in that the welding is ultrasonic welding.

3.      A method according to claim 1 or claim 2 characterised in that it comprises feeding the web (34) longitudinally, clamping a leading end portion thereof, displacing the web out of the plane thereof between its two end portions to form a U and bringing a trailing end portion into an adjacent position to the leading end portion, laying one end portion (42) over the other (42) and welding the end portions together by said transverse weld to form a ring.

4.      A method of joining two opposed ends of an elongate web of a material to form a ring, characterised in that it comprises feeding the web (34) longitudinally, clamping a leading end portion thereof, displacing the web out of the plane thereof between its two end portions to form a U and to bring a trailing end portion of the web into an adjacent position to the leading end portion, laying one end portion (42) over the other (42), and securing the end portions together.

5.      Apparatus for joining two opposed ends of an elongate web of material to form a ring, characterised in that it comprises means (38) for feeding the web (34) longitudinally, a clamp (G) for clamping a leading end portion of the web, means (C) for engaging and displacing the web out of the plane thereof between its two end portions to form a U, bringing a trailing end portion of the web into an adjacent position to the leading end portion, means (H) for laying one end portion (42) over the other (42), and means (I) for securing them together.

6.    Apparatus according to claim 5 characterised in that the securing means is a welding device (I) extending substantially entirely across the web (34), producing a transverse weld.

7.    Apparatus according to claim 5 characterised in that the welding device (I) is an ultrasonic welding device.

8.    Apparatus according to any one of claims 5 to 7 characterised in that there is a support (40) over which the feeding means (38) feeds the web (34) to the clamp (G), the support having an opening (41) therein, the engaging and displacing means (C) passing the web through the opening to form the U.

9.    Apparatus according to claim 8 characterised in that a further support (E) is brought into the opening (41) after the web (34) has been passed through it, the further support supporting the end portions as they are secured by the securing means.

10.    Apparatus according to claim 9 characterised in that the further support (E) and the opening (41) are tapered away from the plane in which the web is fed, whereby the web is wedged in the opening (41) between the support (40) and the further support (E) when the further support is brought into the opening.

FIG.1

0004782

FIG. 2

FIG. 3

FIG. 4.

FIG. 5

FIG. 6

FIG. 7

I

FIG. 9

50

46

48

52

34

E

G

C

54

H                    H

41

40          40

34

FIG. 8

44

J